Europäisches Patentamt

European Patent Office

Office européen des brevets

(19)

(11) Veröffentlichungsnummer: **0 053 673**
**B1**

(12) **EUROPÄISCHE PATENTSCHRIFT**

(45) Veröffentlichungstag der Patentschrift:
27.02.85

(51) Int. Cl.⁴: **H 04 B 9/00,** H 04 Q 11/04,
H 04 M 11/06

(21) Anmeldenummer: 81108252.8

(22) Anmeldetag: 13.10.81

(54) **Dienstintegriertes, digitales Übertragungssystem.**

(30) Priorität: 05.12.80 DE 3045875

(43) Veröffentlichungstag der Anmeldung:
16.06.82 Patentblatt 82/24

(45) Bekanntmachung des Hinweises auf die Patenterteilung:
27.02.85 Patentblatt 85/9

(84) Benannte Vertragsstaaten:
AT CH DE FR GB LI NL SE

(56) Entgegenhaltungen:
EP - A - 0 053 238
EP - A - 0 053 239
DE - A - 2 828 624

PROCEEDINGS OF THE IEEE, Band 68, Nr. 10, Oktober 1980, Seiten 1291-1299 New York, U.S.A. K.Y. CHANG: "Fiberguide systems in the subscriber loop"
THE INTERNATIONAL SYMPOSIUM ON SUBSCRIVER LOOPS AND SERVICES, 20.-24. März 1978, Seiten 39-43 Atlanta, New York, U.S.A. B.S. HELLIWELL et al.: "Optical fibre transmission developments and the local loop"

(73) Patentinhaber: ANT Nachrichtentechnik GmbH,
Gerberstrasse 33, D-7150 Backnang (DE)

(72) Erfinder: Koeck, Klaus, Dipl.-Ing., Dunantstrasse 2,
D-7150 Backnang (DE)

(74) Vertreter: Schickle, Gerhard, Dipl.-Ing., ANT
Nachrichtentechnik GmbH Patent- und Lizenzabteilung
Gerberstrasse 33, D-7150 Backnang (DE)

## Beschreibung

Die Erfindung betrifft ein dienstintegriertes, digitales Übertragungssystem gemäss dem Oberbegriff des Hauptanspruchs.

In den beiden europäischen Patentanmeldungen EP-A Nrn. 53238 und 53239 wurde bereits ein Übertragungssystem der obigen Art vorgeschlagen, bei dem die Stromversorgung nicht amtsseitig erfolgt, das jedoch trotzdem eine hohe Verfügbarkeit aufweist, und dabei in unaufwendiger und energiesparender Weise ausgeführt ist.

Durch den Aufsatz „Optical Fiber Transmission Developments and the Local Loop" von Helliwell *et al.* in „The International Symposium on Subscriber Loops and Services", 20.-24. März 1978, ist ein dienstintegriertes Teilnehmersystem mit optischer Übertragung bekanntgeworden, bei dem eine Stand-by-Batterie die Teilnehmereinrichtungen bei Netzausfall mit Strom versorgt, so dass eine Sprechverbindung aufrechterhalten werden kann.

In dem Aufsatz „Fiberguide System in the Subscriber Loop" in „Proceedings of the IEEE", vol. 58, Nr. 10, Oktober 1980, ist ein ähnliches System wie das zuvor beschriebene diskutiert, wobei ebenfalls bei Netzausfall eine Batterie die wesentlichen Dienste ermöglicht. Allerdings sind die Multiplex- und Demultiplexeinrichtungen derart konstruiert, dass eine Verminderung der Bruttoübertragungsrate nicht eintritt.

In der vorliegenden Anmeldung soll ein Übertragungssystem der obigen Art vorgestellt werden, das auch nach langen Netzausfallzeiten noch verfügbar ist und in unaufwendiger Weise den Stromverbrauch noch weiter reduziert.

Die Lösung der erfindungsgemässen Aufgabe erfolgt mit den im Anspruch 1 gekennzeichneten Merkmalen.

Das erfindungsgemässe Übertragungssystem weist die Vorteile auf, dass bei Netzausfall oder Störungen der Multiplexer oder Demultiplexer auf eine Notdienstübertragung umgeschaltet wird, die auf einer Umgehung der Multiplexer bzw. Demultiplexer basiert, wodurch alle Baugruppen zur Übertragung der anderen irrelevanten Dienste wie Fernsehen, Bildteil des Bildfernsprechens, Stereorundfunk usw. abgeschaltet werden können. Dadurch ergibt sich eine grosse Einsparung an Strom. Gemäss der Erfindung wird also nur ein lebensnotwendiger Notdienst wie Fernsprechen oder Fernschreiben aufrechterhalten. In einer Ausgestaltung der Erfindug wird durch Abschaltung weiterer Baugruppen in der gesprächsfreien Zeit weiterhin Strom gespart, wobei nur noch der optische Empfänger und der Detektor zur Anlassung der abgeschalteten Baugruppen bei kommendem oder gehendem Ruf aktiviert bleiben.

Vorteilhafterweise arbeiten die erfindungsgemässen Umgehungsanordnungen sowie der optische Empfänger bei der Notdienstübertragung mit kleiner bzw. reduzierter Leistung, so dass auch hier Energie eingespart werden kann.

Es folgt nun die Beschreibung der Erfindung anhand der Figuren.

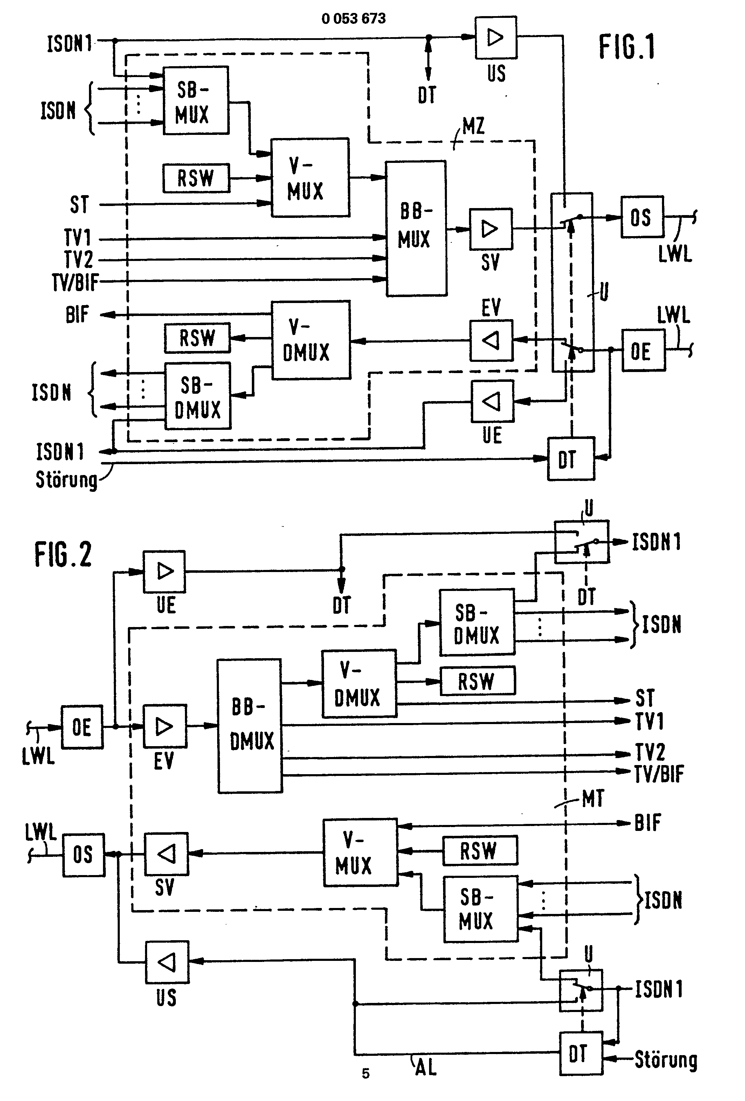

Die Fig. 1 zeigt ein Blockschaltbild der vermittlungsseitigen Einrichtungen, die Fig. 2 das der teilnehmerseitigen Einrichtungen eines Ausführungsbeispiels des erfindungsgemässen Übertragungssystems, wobei in beide Figuren innerhalb des durch die gestrichelte Linie gekennzeichneten Bereiches MZ, MT die für den Multiplexbetrieb erforderlichen Baugruppen liegen.

In Fig. 1 ist eine dreistufige Multiplexbildung erkennbar, wobei die Schmalbandsignale ISDN durch den Schmalbandmultiplexer SBMUX in einer ersten Stufe zusammengefasst werden, in einer zweiten Stufe VMUX die Schmalbandmultiplexsignale, ein Rahmensynchronwort RSW sowie beispielsweise im Zeitmultiplex zusammengefasste Stereotonsignale ST gemultiplext werden und wobei in einer dritten Stufe, dem Breitbandmultiplexer BBMUX das Ausgangssignal des Vormultiplexers VMUX und die Fernsehkanäle TV1, TV2 sowie ein weiterer Fernsehkanal TV oder ein Bildfernsprechkanal BIF gemultiplext werden und über einen Sendeverstärker SV und einen Umschalter U auf den optischen Sender OS eines Lichtwellenleitersystems LWL gelangen.

Auf der Empfangsseite findet eine Demultiplexbildung in nur zwei Stufen statt, wobei das Ausgangssignal des optischen Empfängers OE über den Umschalter U und den Empfangsverstärker EV auf den Vordemultiplexer VDMUX gelangt, durch den die Schmalbandmultiplexsignale, das Rahmensynchronwort RSW und gegebenenfalls Bildfernsprechen BIF gewonnen werden. Das Schmalbandmultiplexsignal wird schliesslich durch den Schmalbanddemultiplexer SBDMUX in die einzelnen Schmalbandkanäle ISDN aufgeteilt.

Die erfindungsgemässen Umgehungsanordnungen bestehen nun sendeseitig aus einem Sendeverstärker US, durch den ein ausgewählter Schmalbandkanal ISDN1, beispielsweise Fernsprechen, über den Umschalter U direkt auf den optischen Sender OS des Lichtwellenleitersystems geschaltet werden kann, und empfangsseitig aus einem Empfangsverstärker UE, dessen Eingang über den Umschalter U mit dem Ausgang des optischen Empfängers OE verbunden ist und der an seinem Ausgang die Schmalbandsignale ISDN1 liefert. Mit ISDN seien die digitalisierten Schmalbandsignale, mit ISDN1 die Signale eines digitalen Fernsprechapparates, der beispielsweise nach dem Zeitgabelverfahren arbeitet, bezeichnet. Der umgehungsseitige Sende- bzw. Empfangsverstärker kann sehr schmalbandig und damit unaufwendig und stromsparend ausgeführt sein.

Weiterhin ist ein Detektor DT erkennbar, durch den bei einer Störung, beispielsweise aufgrund eines Fehlers im Multiplexsystem MZ, von Multiplexbetrieb auf Notdienst umgeschaltet wird. Durch die Umschalter der Umschalteinrichtung U werden die optischen Kanäle an die Umgehungsanordnungen angeschaltet. Das Multiplexsystem MZ ist dann völlig funktionsfrei und kann abgeschaltet werden. In Zeiten, wenn keine Verbindung besteht, können die Umgehungsanordnungen US bzw. UE sowie der optische Sender OS ebenfalls abgeschaltet werden, allein der optische Empfänger und der Detektor DT bleiben aktiviert, welch letzterer einen ankommenden oder gehenden Verbindungswunsch detektiert und die genannten Baugruppen wieder einschaltet.

In Fig. 2 sind die der wermittlungsseitigen Einrichtungen der Fig. 1 entsprechenden dreistufigen Demultiplex- bzw. zweistufigen Multiplexeinrichtungen erkennbar, wobei empfangsseitig das vom optischen Empfänger OE des Lichtwellenleitersystems LWL abgegebene elektrische Signal im Empfangsverstärker EV verstärkt und durch den Breitbanddemultiplexer BBDMUX in die Breitbandsignale TV1, TV2 und einem weiteren Fernsehsignal TV oder gegebenenfalls Bildfernsprechen BIF und in das Vormultiplexsignal aufgeteilt werden. Das Vormultiplexsignal wird in der zweiten Stufe VDMUX in Stereoton ST, Rahmensynchronwort ESW und Schmalbandmultiplexsignal aufgeteilt, welch letzteres in dem Schmalbanddemultiplexer SBDMUX in die einzelnen Schmalbandsignale ISDN aufgelöst wird. Sendeseitig werden die Schmalbandsignale ISDN im Schmalbandmultiplexer SBMUX zusammengefasst und zusammen mit dem Rahmensynchronwort RSW und dem Bildfernsprechkanal im Vormultiplexer VMUX gemultiplext und über den Sendeverstärker SV auf den optischen Sender OS des Lichtwellenleitersystems LWL gegeben.

Die beschriebene Multiplex- und Verstärkerbaugruppe MT ist erfindungsgemäss für einen ausgewählten Notdienstkanal ISDN1 mittels Umschalter U und den sendeseitigen (US) bzw. empfangsseitigen (UE) Umgehungsanordnungen umgehbar. Des weiteren ist ein Detektor DT erkennbar, durch den das Multiplex- und Verstärkersystem MT und die Stromversorgung überwacht und im Falle einer Störung die Umschaltungseinrichtung U betätigt sowie ein Alarm AL in den Umgehungsweg eingeschleust wird. Bei Spannungsausfall werden die Multiplex- und Verstärkerbaugruppen MT und in verbindungsfreien Zeiten auch die Umgehungsanordnungen und der optische Sender abgeschaltet. Letztere werden bei ankommendem oder gehendem Verbindungswunsch durch den Detektor DT wieder angelassen.

Durch die erfindungsgemässe Aufteilung ist es möglich, das System modular auszubauen, indem in der Grundausstattung nur der Fernsprechkanal ISDN1 eingechlossen ist, wofür lediglich die Umgehungsanordnungen und der Detektor benötigt werden.

Anstelle der beiden Lichtwellenleiter kann auch eine einzige Faser mit optischen T-Kopplern, beispielsweise in der Grundausstattung, oder im Wellenlängenmultiplexverfahren, beispielsweise bei Vollausbau, benutzt werden.

Durch die erfindungsgemässe Anordnung ist es möglich, beispielsweise bei Netzausfall in den teilnehmerseitigen Einrichtungen, eine sehr viel längere Netzausfallzeit zu überbrücken, da in verbindungslosen Zeiten nur der Strom für den überwachenden Detektor und für den optischen Empfänger, der im reinen Überwachungsbetrieb ebenfalls reduziert werden kann, von der Pufferbatterie geliefert werden muss.

## Patentansprüche

1. Dienstintegriertes, digitales im Zeitmultiplex arbeitendes System mit Einrichtungen zur Übertragung von Schmal- und Breitbandsignalen zwischen einem Teilnehmer und einer Zentrale, wobei sendeseitig die Schmal- bzw. die Breitbandsignale durch Multiplexer zusammengefasst, über ein Lichtwellenleitersystem übertragen und empfangsseitig durch Demultiplexer die Schmal- und Breitbandsignale zurückgewonnen werden, wobei die teilnehmerseitigen Einrichtungen, die durch das Netz mit Strom versorgt werden, einen Ladungsspeicher aufweisen, der bei Netzausfall die Stromversorgung übernimmt, und wobei bei Netzausfall die Einrichtungen derart umschaltbar sind, dass die Übertragung über das Lichtwellenleitersystem mit verminderter Bitrate erfolgt, dadurch gekennzeichnet, dass in den Einrichtungen sende- und empfangsseitig das Lichtwellenleitersystem (LWL) mit Umgehungsanordnungen (US, UE) verbindbar ist, über die ein Schmalbandsignal (ISDN1) unter Umgehung der Multiplexer (MUX) bzw. Demultiplexer (DMUX) als Notdienst übertragbar ist, und dass ein Detektor (DT) mit Umschalteinrichtung (U) vorgesehen ist, bei dessen Ansprechen eine Umschaltung auf Notdienstübertragung erfolgt.

2. Übertragungssystem nach Anspruch 1, dadurch gekennzeichnet, dass der Detektor (DT) bei Netzausfall oder Störungen der Multiplexer (MUX) bzw. Demultiplexer (DMUX) anspricht.

3. Übertragungssystem nach Anspruch 2, dadurch gekennzeichnet, dass durch den Detektor (DT) ein Alarmsignal (AL) erzeugt wird, das über die sendeseitige Umgehungsanordnung (US) und das Lichtwellenleitersystem (LWL) übertagbar und das empfangsseitig durch den Detektor (DT) auswertbar ist.

4. Übertragungssystem nach einem der Ansprüche 2 oder 3, dadurch gekennzeichnet, dass durch den Detektor (DT) überwacht wird, ob Signale übertragen werden oder nicht, und dass die zur Überstragung benötigten Baugruppen der Einrichtungen abgeschaltet und nur der Detektor (DT) und der optische Empfänger (OE) des Licthwellenleitersystems (LWL) mit Strom versorgt werden, wenn keine Übertragung stattfindet, und dass bei gehendem oder kommendem Ruf nur die für die Notdienstübertragung erforderlichen Baugruppen mit Strom versorgt werden.

5. Übertragungssystem nach Anspruch 4, dadurch gekennzeichnet, dass der optische Empfänger (OE) mit reduziertem Strom versorgt wird.

6. Übertragungssystem nach einem der vorhergehenden Ansprüche, dadurch gekennzeichnet, dass die Umgehungsanordnungen (US, UE) Verstärker mit reduzierter Leistung und/oder Bandbreite enthalten.

7. Übertragungssystem nach einem der vorhergehenden Ansprüche, dadurch gekennzeichnet, dass die Übertragung nach dem Zeitgabelverfahren erfolgt.

## Claims

1. Service-integrated digital system operating in time multiplex for the transmission of narrow and wide band signals between a subscriber and an exchange, wherein the narrow or wide band signals are combined by multiplexers and transmitted by way of a light wave conductor system at the transmitter side and the narrow and wide band signals are regained through demultiplexers at the receiver side, wherein the equipments, which are at the subscriber side and must be supplied with current through the mains, display a charge store which in case of mains failure takes over the current supply and wherein the equipments are in case of mains failure switchable over in such a manner that the transmission by way of the light wave conductor system takes place at reduced bit rate, characterised thereby, that the light wave conductor system (LWL) is connectible in the equipments at the transmission and reception side with by-pass arrangements (US, UE), by way of which a narrow band signal (ISDN1) is transmissible as emergency service while by-passing the multiplexers (MUX) and demultiplexers (DMUX) respectively and that a detector (DT) with switch-over equipment (U) is provided, on the response of which a switch-over to emergency service transmission takes place.

2. Transmission system according to Claim 1, characterised thereby, that the detector (DT) responds on mains failure or faults of the multiplexers (MUX) and demultiplexers (DMUX) respectively.

3. Transmission system according to Claim 2, characterised thereby, that an alarm signal (AL), which is transmissible by way of the by-pass arrangement (US) at the transmission side and the light wave conductor system (LWL) and which is evaluatable by the detector (DT) at the reception side, is generated by the detector (DT).

4. Transmission system according to Claim 2 or 3, characterised thereby, that it is monitored through the detector (DT) whether or not signals are being transmitted and that the component groups, needed for the transmission, of the equipments are switched off and only the detector (DT) and the optical receiver (OE) of the light wave conductor system (LWL) are supplied with current when no transmission takes place and that, in the case of an outgoing or incoming call, only the component groups required for the emergency service transmission are supplied with current.

5. Transmission system according to Claim 4, characterised thereby, that the optical receiver (OE) is supplied with reduced current.

6. Transmission system according to one of the preceding claims, characterised thereby, that the by-pass arrangements (US, UE) contain amplifiers with reduced power and/or bandwidth.

7. Transmission system according to one of the preceding claims, characterised thereby, that the transmission takes place by the time fork method.

## Revendications

1. Système numérique à services intégrés, fonctionnant en multiplex temporel avec des équipements pour la transmission de signaux à bande étroite et à large bande entre un abonné et un central; les signaux à bande étroite et à large bande étant concentrés par des multiplexeurs du côté émission, transmis par un système de guides optiques, puis reconstitués par des démultiplexeurs du côté réception; les équipements d'abonné, alimentés en courant par le réseau, comportant un accumulateur de charge qui assure l'alimentation en courant dans le cas d'une défaillance du réseau, pendant laquelle les équipements sont commutables de façon que la transmission s'effectue par le système de guides optiques (LWL), à un débit binaire réduit, ledit système étant caractérisé en ce que, dans les équipements d'émission et de réception, le système de guides optiques (LWL) est connectable à des circuits d'évitement (US, UE), par lesquels un signal à bande étroite (ISDN1) est transmissible en service d'urgence, avec évitement des multiplexeurs (MUX) ou des démultiplexeurs (DMUX); et un détecteur (DT) est prévu avec un dispositif inverseur U, dont le fonctionnement provoque une commutation sur transmission d'un service d'urgence.

2. Système de transmission selon la revendication 1, caractérisé en ce que le détecteur (DT) réagit en cas de défaillance du réseau ou de perturbations des multiplexeurs (MUX) ou des démultiplexeurs (DMUX).

3. Système de transmission selon la revendication 2, caractérisé en ce que le détecteur (DT) délivre un signal d'alarme (AL), qui peut être transmis par le circuit d'évitement (US) du côté émission et le système de guides optiques (LWL) et est interprété par le détecteur (DT) du côté réception.

4. Système de transmission selon l'une des revendications 2 ou 3, caractérisé en ce que le détecteur (DT) surveille si des signaux sont transmis ou non; les modules des équipements nécessaires pour la transmission sont déconnectés et seuls le détecteur (DT) et le récepteur optique (OE) du système de guides optiques (LWL) sont alimentés en courant en l'absence de transmission; et, dans le cas d'un appel entrant ou sortant, seuls les modules nécessaires pour la transmission d'un service d'urgence sont alimentés en courant.

5. Système de transmission selon la revendication 4, caractérisé en ce que le récepteur optique (OE) est alimenté par un courant réduit.

6. Système de transmission selon l'une des revendications 1 à 5, caractérisé en ce que les circuits d'évitement (US, UE) comportent des amplificateurs à puissance et/ou largeur de bande réduites.

7. Système de transmission selon l'une des revendications 1 à 6, caractérisé en ce que la transmission s'effectue en multiplex temporel statistique.

0 053 673

FIG.1

FIG.2